# EUROPEAN PATENT APPLICATION

(11) **EP 4 134 823 A1**
(43) Date of publication of application: **15.02.2023**
(21) Application number: 22189329.0
(22) Date of filing: 08.08.2022
(51) Int. Cl.: G06F 9/54

(54) **MULTI-PURPOSE APPLICATION ARCHITECTURE**

(30) Priority: 09.08.2021 US 202163231241 P
(71) Applicant: Xcelastream, Inc., Gainesville, Virginia 20155 (US)
(72) Inventor: Thai, Ari, Fairfax, VA, 22030 (US)
(74) Representative: FRKelly

(57) **Abstract**

A principal application may be executed on a principal computing device. A surrogate application may be executed on a surrogate computing device. The surrogate application running on the surrogate computing device may be a surrogate for the principal application running on the principal computing device. The principal application running on the principal computing device and the surrogate application running on the surrogate computing device may form multiple presences of the principal application on separate computing devices. Information may be relayed between the principal application running on the principal computing device and the surrogate application running on the surrogate computing device.

## Description

### CROSS-REFERENCE TO RELATED APPLICATIONS

The present application claims priority to United States Provisional Patent Application No. 63/231,241 for "Surrogated Application Architecture," which was filed on August 9, 2021, the entirety of which is incorporated herein by reference.

### FIELD

This disclosure relates to utilizing a multi-presence application architecture by running a principal application and a surrogate application on separate computing devices.

### BACKGROUND

Applications are designed to work on specific computing devices. For example, an application running on a computing device may be designed to make system calls for certain functions to the operating system of the computing device on which it is executed and receive results of those functions from the operating system. To offload the functionalities of the application on other computing devices, the application may need to be modified.

### SUMMARY

This disclosure relates to utilizing a multi-presence application architecture. A principal application may be executed on a principal computing device. A surrogate application may be executed on a surrogate computing device. The surrogate application running on the surrogate computing device may be a surrogate for the principal application running on the principal computing device. The principal application running on the principal computing device and the surrogate application running on the surrogate computing device may form multiple presences of the principal application on separate computing devices. Information may be relayed between the principal application running on the principal computing device and the surrogate application running on the surrogate computing device.

A principal computing device for utilizing a multi-presence application architecture may include one or more electronic storage, one or more communication interfaces, one or more processors and/or other components. The electronic storage may store information relating to the principal application, information relating to the principal computing device, information relating to the surrogate application, information relating to the surrogate computing device, and/or other information.

The communication interface(s) may be configured to connect the principal computing device to one or more surrogate computing device(s). A surrogate computing device may execute one or more surrogate applications.

The processor(s) may be configured by machine-readable instructions and/or may include specialized hardware components to provide one or more functionalities for utilizing a multi-presence application architecture. For example, the processor(s) may include one or more distinct hardware components. The processor(s) may include one or more processor components (e.g., software components and/or hardware components). The processor(s) may include one or more FPGA and/or ASIC devices. The distinct hardware component(s) may include one or more IP cores inside an FPGA and/or ASIC device. The processor components may include one or more of a principal application component, a communication component, and/or other processor components.

The principal application component may be configured to execute one or more principal applications on the principal computing device. A surrogate application running on a surrogate computing device may be a surrogate for a principal application running on the principal computing device. A principal application running on the principal computing device and a surrogate application for the principal application running on a surrogate computing device may form multiple presences of the principal application on separate computing devices.

In some implementations, a principal application may be a video conferencing application. In some implementations, a principal application may be a secure web browser virtual machine application. In some implementations, a principal application may be a network application. In some implementations, a principal application may be a storage application. In some implementations, a principal application may be a graphical user interface application.

In some implementations, multiple surrogate applications for a single principal application may be executed on multiple surrogate computing devices.

The communication component may be configured to relay information between the principal application(s) running on the principal computing device and the surrogate application(s) running on the surrogate computing device(s). Information may be relayed between a principal application running on the principal computing device and a surrogate application for the principal application running on a surrogate computing device.

In some implementations, the relay of information between a principal application running on the principal computing device and a surrogate application running on a surrogate computing device may include: (1) identification of a subset of system calls made by the principal application running on the principal computing device; (2) provision of the subset of system calls to the surrogate application running on the surrogate computing device, wherein the surrogate application executes the subset of system calls on the surrogate computing device to generate responsive information and/or other information; (3) reception of the responsive information and/or other information from the surrogate application running on the surrogate computing device; and (4) provision of the responsive information and/or other information to the principal application running on the principal computing device.

In some implementations, the principal application may run on the principal computing device using a first operating system. The surrogate application for the principal application may run on the surrogate computing device using a second operation system different from the first operating system. The relay of information between the principal application running on the principal computing device and the surrogate application running on the surrogate computing device may further include translation of information between the first operating system and the second operating system.

In some implementations, a principal application running on the principal computing device may be represented by one or more windows. A surrogate application for the principal application running on a surrogate computing device may be represented by one or more windows. The window(s) representing the principal application running on the principal computing device and the window(s) representing the surrogate application running on the surrogate computing device may be configured to have same/similar shape, size, and/or position within their respective desktop environment.

These and other objects, features, and characteristics of the system and/or method disclosed herein, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention. As used in the specification and in the claims, the singular form of "a", "an", and "the" include plural referents unless the context clearly dictates otherwise.

### BRIEF DESCRIPTION OF THE DRAWINGS

FIG. 1 illustrates an example principal computing device.
FIG. 2 illustrates an example principal computing device and an example surrogate computing device.
FIG. 3 illustrates an example use of multi-presence application architecture in a remote desktop scenario.
FIG. 4 illustrates an example use of multi-presence application architecture in a remote desktop scenario to simulate a principal application running on a single computing device.
FIG. 5 illustrates an example use of multi-presence application architecture in which a surrogate visual representation is replaced with a principal visual representation.
FIG. 6 illustrates an example use of multi-presence application architecture in which a surrogate application is run on a surrogate computing device for multiple computing devices.
FIG. 7 illustrates an example use of multi-presence application architecture in which multiple surrogate applications are run on multiple surrogate computing devices for a computing device.

### DETAILED DESCRIPTION

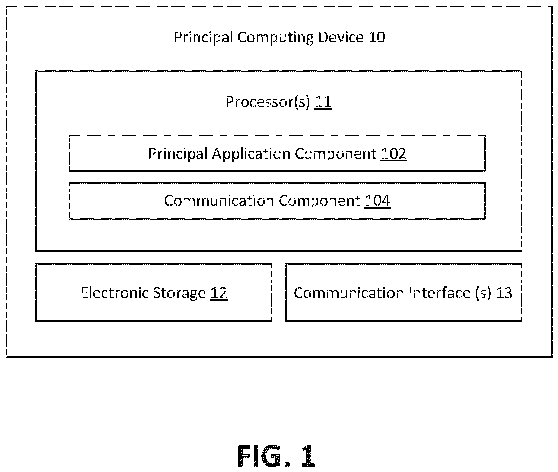

This disclosure relates to a multi-presence application architecture. FIG. 1 illustrates an example principal computing device 10 for utilizing the multi-presence application architecture. The principal computing device 10 may be directly and/or indirectly connected to one or more surrogate computing devices. The principal computing device 10 may be directly and/or indirectly connected to other computing devices.

A principal application may be executed on the principal computing device 10. One or more surrogate applications may be executed on one or more surrogate computing devices. A surrogate application running on a surrogate computing device may be a surrogate for the principal application running on the principal computing device 10. The principal application running on the principal computing device 10 and the surrogate application(s) running on the surrogate computing device may(s) form multiple presences of the principal application on separate computing devices. Information may be relayed between the principal application running on the principal computing device 10 and the surrogate application(s) running on the surrogate computing device(s).

The principal computing device 10 may include one or more of processor(s) 11, electronic storage 12, communication interface(s) 13, and/or other components. The electronic storage 12 may include one or more electronic storage media that electronically stores information. Electronic storage 12 may store software algorithms, information determined by processor(s) 11, information received remotely, and/or other information that enables principal computing device 10 to function properly. For example, electronic storage 12 may store information relating to the principal application, information relating to the principal computing device, information relating to the surrogate application, information relating to the surrogate computing device, and/or other information.

The communication interface(s) may be configured to connect the principal computing device to one or more surrogate computing device(s). A surrogate computing device may execute one or more surrogate applications.

The communication interface(s) 13 may refer to interface(s) and/or protocol(s) that enable the principal computing device 10 to communicate with other computing devices. communication interface(s) 13 may include one or more circuits, memory, processor, interconnects, connectors, pins, logic, and/or other components that enable communication between different components/devices. The communication interface(s) 13 may include one or more network I/O devices which allows connections to one or more networks/devices/components using one or more communication protocols (e.g., network protocols, remote access protocols). The communication interface(s) 13 may wired communication interface(s) and/or wireless communication interface(s).

The processor(s) 11 may be configured to provide information processing capabilities in the principal computing device 10. As such, the processor(s) 11 may comprise one or more of a digital processor, an analog processor, a digital circuit designed to process information, a central processing unit, a graphics processing unit, a microcontroller, an analog circuit designed to process information, a state machine, and/or other mechanisms for electronically processing information. The processor(s) 11 may facilitate the principal computing device 10 to utilize a multi-presence application architecture. The processor(s) may include one or more processor components (e.g., software components and/or hardware components). The processor components may include one or more of a principal application component 102, a communication component 104, and/or other processor components.

The processor(s) 11 may be configured by machine-readable instructions and/or may include specialized hardware components to provide one or more functionalities described herein, such as utilizing a multi-presence application architecture. The processor(s) 11 may include one or more processor components (e.g., software components and/or hardware components). For example, the processor(s) 11 may include one or more distinct hardware components configured to facilitate/utilize a multi-presence application architecture. In some implementations, a distinct hardware component may include one or more cores (e.g., intellectual property cores) inside hardware-implemented devices, such as field-programmable gate array devices and/or application-specific integrated circuit devices. As another example, the processor(s) 11 may be configured by software component (e.g., software modules) to perform one or more functionalities described herein. As yet another example, one or more functionalities described herein may be implemented in the processor(s) 11 via hardware while one or more other functionalities described herein may be implemented in the processor(s) 11 via software.

The principal application component 102 may be configured to execute one or more principal applications on the principal computing device 10. Executing a principal application on the principal computing device 10 may include running the principal application on the principal computing device 10. Executing a principal application on the principal computing device 10 may include causing the principal computing device 10 to run the principal application.

A principal computing device may refer to a computing device on which a principal application is executed. A principal application may refer to a computer program designed to perform one or more functions on a single computing device. A principal application may refer to a computer program designed to make system calls to a single operating system on which it is executed. A principal application may refer to a part of a computer program (e.g., monolithic software application that is part of a larger distributed application) designed to perform one or more functions on a single computing device. A principal application may refer to a part of a computer program designed to make system calls to a single operating system (OS) via the OS' standard Application Programing Interface (API) on which it is executed. The OS' services may carry out the requested system functions, using the elements/resources of the computing device on which it is run, and return outputs/results, if any, to the principal application. A principal application may be designed to receive outputs/results of the system calls from the single OS on which it is executed.

One or more surrogate application for the principal application may be run on one or more surrogate computing device. A surrogated computing device may refer to a computing device on which a surrogate application is executed. A surrogate application running on a surrogate computing device may be a surrogate for a principal application running on a principal computing device. A surrogate application may serve as a substitute for a principal application running on the principal computing device. A surrogate application may perform one or more functions of a principal application without knowledge of the principal application. That is, the principal application for which the surrogate application is a surrogate may not be aware of the existence of the surrogate application. A surrogate application for a principal application may cause one or more functions of a principal application to be performed by a surrogate computing device instead of a principal computing device. A surrogate application for a principal application may cause one or more system calls made by the principal application to be executed on a surrogate computing device instead of a principal computing device. A surrogate application for a principal application may cause one or more system calls made by the principal application to be executed by the OS of a surrogate computing device instead of the OS of a principal computing device.

A surrogate application running on a surrogate computing device may create the presence of the principal application on a surrogate computing device. A principal application running on a principal computing device and one or more surrogate applications for the principal application running on surrogate computing device(s) may form multiple presences of the principal application on separate computing devices.

A principal application may be designed to be a single-presence application-that is, a principal application may be designed to run on a single computing device/OS. A surrogate application for a principal application may be run on a surrogate computing device to create additional presence of the principal application on the surrogate computing device. A surrogate application running on a surrogate computing device may enable a principal application to interact with elements/resources of the surrogate computing device as if the principal application were running on the surrogate computing device.

The multi-presence application architecture of the present disclosure enables one or more functions (e.g., storage access, graphical user interface, networking, etc.) of the principal application to be rerouted to a surrogate computing device for execution by a surrogate application running on the surrogate computing device, and enables return of the execution result(s) to the principal application running on the principal computing device.

The communication component 104 may be configured to communicate with one or more computing devices. The communication component 104 may be configured to communicate with one or more surrogate computing devices and/or other computing devices. The communication component 104 may include and/or use one or more communication protocols to communicate with computing device(s). Communication with a computing device may include reception of information (e.g., data, unstructured/unprocessed/unorganized data, structured/processed/organized data, commands, etc.) from the computing device, transmission of information to the computing device, and/or other communication of information with the computing device. Communication with a computing device may include directly and/or indirect communication with the computing device.

The communication component 104 may be configured to relay information between the principal application(s) running on the principal computing device 10 and the surrogate application(s) running on the surrogate computing device(s). Information may be relayed between a principal application running on the principal computing device 10 and a surrogate application for the principal application running on a surrogate computing device. Relay of information between a principal application running on a principal computing device and a surrogate application for the principal application running on a surrogate computing device may include: (1) information from the principal application being transmitted to the surrogate application, or vice versa, (2) information for the principal application being transmitted to the surrogate application, or vice versa, (3) information output by the principal application being transmitted to the surrogate application, or vice versa, and/or (4) information input to the principal application being transmitted to the surrogate application, or vice versa.

In some implementations, different operating systems may be running on a principal computing device and a surrogate computing device. The relay of information between a principal application running on a principal computing device and a surrogate application running on a surrogate computing device may include translation of information (e.g., translation of system calls, translation of system function results) between the different operating systems.

In some implementations, the relay of information between a principal application running on a principal computing device and a surrogate application running on a surrogate computing device may include: (1) identification of a subset of system calls made by the principal application running on the principal computing device; (2) provision of the subset of system calls to the surrogate application running on the surrogate computing device, wherein the surrogate application executes the subset of system calls on the surrogate computing device to generate responsive information and/or other information; (3) reception of the responsive information and/or other information from the surrogate application running on the surrogate computing device; and (4) provision of the responsive information and/or other information to the principal application running on the principal computing device.

System calls made by the principal application may be monitored to determine when one or more specific system calls are made by the principal application. For example, system calls made by the principal application may be compared with a listing of system calls and/or a listing of system call types to determine when the listed system calls/system calls of listed types are made by the principal application. The identified system calls may be stopped from being answered by the OS of the principal computing device. Rather than allow the identified system calls to proceed to the OS of the principal computing device (e.g., allow the OS of the principal computing device to respond to a request made by an identified system call), the identified system calls may be rerouted to a surrogate application of a surrogate computing device. The surrogate application may make the identified system calls on the OS of the surrogate computing device. The surrogate computing device may execute the identified system calls to generate one or more results (responsive information). The surrogate application may transmit the results generated by the surrogate computing device to the principal application. The principal application may be unaware of the system calls being rerouted to the surrogate computing device. The principal application may be unaware that the results were not generated by the principal computing device.

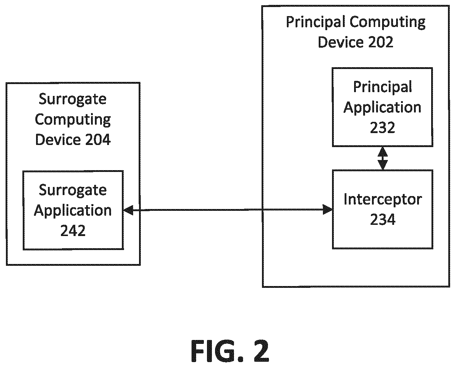

FIG. 2 illustrates an example principal computing device 202 and an example surrogate computing device 204. The principal computing device 202 may communicate with the surrogate computing device 204. A principal application 232 may be running on the principal computing device 202. A surrogate application 242 may be running on the surrogate computing device 204. The surrogate application 242 may be a surrogate for the principal application 232.

The principal computing device 202 may include an interceptor 234. The interceptor 234 may be a middleware layer that is connected to the OS API of the principal computing device 202. The interceptor 234 may intercept a subset of the system calls made by the principal application 232 and transmit the intercepted system calls to the surrogate application 242 for execution. The OS of the principal computing device 202 may not execute the intercepted system calls. The interceptor 234 may monitor the system calls made by the principal application 232 and reroute the subset of the system calls to the surrogate application 242. The surrogate application 242 may cause the surrogate computing device 204 to receive and respond to the intercepted/rerouted system calls. The surrogate application 242 may transmit results of the intercepted/rerouted system calls (generated by the surrogate computing device 204) to the interceptor 234. The interceptor 234 may provide the results to the principal application 232.

In some implementations, the principal computing device 202/principal application 232 and the surrogate computing device 204/surrogate application 242 may operate using different languages/formats. For example, the OS of the principal computing device 202 and the OS of the surrogate computing device 204 may be different. The interceptor 234 and/or the surrogate application 242 may perform translation between the principal computing device 202/principal application 232 and the surrogate computing device 204/surrogate application 242. For example, the interceptor 234 and/or the surrogate application 242 may perform translation between different OS's so that the system calls and results are properly formatted.

The types of system calls that are intercepted/rerouted by the interceptor 234 may depend on the type of principal application 232, the type of surrogate application 242, and/or other information. Different system calls may be intercepted/rerouted for different types of principal application 232 and different types of surrogate application 242. Example types of principal application include a video conferencing application, a secure web browser virtual machine application, a network application, a storage application, a graphical user interface application, and/or other application.

A video conferencing application may refer to an application that enables/facilitates video conferencing between different computing devices. The surrogate application 242 for a video conferencing application may establish a video conferencing presence on the surrogate computing device 204. The surrogate application 242 may enable a user to use the video conference application as if the video conference application running on the principal computing device 202 is running on the surrogate computing device 204 (e.g., share desktop of the surrogate computing device 204, open/share/write files of the surrogate computing device). The system calls that are intercepted/rerouted for the video conferencing application may include system calls that request one or more video conferencing functionality (e.g., screen sharing, file access, make/break connection, send/receive information).

A secure web browser virtual machine application may refer to an application that runs a virtual machine to run a browser within the virtual machine. The surrogate application 242 for a secure web browser virtual machine application may establish a secure web browser virtual machine presence on the surrogate computing device 204. The surrogate application 242 may enable a virtual machine for a browser to be generated on the surrogate computing device 204 even though the secure web browser virtual machine application is running on the principal computing device 202. The system calls that are intercepted/rerouted for the secure web browser virtual machine application may include system calls that request one or more secure web browser virtual machine functionality (e.g., run a virtual machine, run/close a browser within the virtual machine).

A network application may refer to an application that utilizes/generates a network for the principal computing device/principal application 232. The surrogate application 242 for a network application may establish a network presence on the surrogate computing device 204. The surrogate application 242 may cause network activity/communication/requests for/by the principal computing device 202 to be completed by/through the surrogate computing device 204 (e.g., provide a form of virtual private network for the principal computing device 202). The system calls that are intercepted/rerouted for the network application may include system calls that request one or more network functionalities (e.g., make/break connection, send/receive information).

A storage application may refer to an application that accesses (e.g., read from, writes to) one or more storage locations. The surrogate application 242 for a storage application may establish a storage presence on the surrogate computing device 204. The surrogate application 242 may enable the principal application 232 to access storage locations of the surrogate computing device 204 as if they are storage locations of the principal computing device 202. The system calls that are intercepted/rerouted for the storage application may include system calls that request one or more storage access functionalities (e.g., open/close drive, file access).

A graphical user interface application may refer to an application that controls and/or simulates graphical user interfaces (GUI). The surrogate application 242 for a graphical user interface application may establish a graphical user interface presence on the surrogate computing device 204. The surrogate application 242 may enable a graphical user interface (e.g., a GUI window) of the principal computing device 202/principal application 232 to interact with graphical user interface of the surrogate computing device 204. For example, a duplicate of the graphical user interface of the principal computing device 202/principal application 232 may be created on the surrogate computing device 204. Corresponding graphical user interfaces on the principal computing device 202 and the surrogate computing device 204 may be configured to have the same/similar shape, size, and/or position within their respective desktop environment. The system calls that are intercepted/rerouted for the graphical user interface application may include system calls that request one or more GUI functionalities (e.g., open/close windows, change shape/size/position of windows). Corresponding graphical user interfaces on the principal computing device 202 and the surrogate computing device 204 may be synchronized so that change in the graphical user interface on one computing device causes the same change in the corresponding graphical user interface on the other computing device.

While FIG. 2 shows a single principal computing device and a single surrogate computing device, and a single principal application and a single surrogate application, this is merely as an example and is not meant to be limiting. For example, multiple surrogate applications for a single principal application may be executed on multiple surrogate computing devices. Same or different subsets of system calls made by the single principal application may be rerouted to separate surrogate applications running on separate surrogate computing devices. Same or different functionalities of the single principal application many be performed/facilitated by separate surrogate applications running on separate surrogate computing devices.

By intercepting/rerouting subset of system calls for a principal application to a surrogate application/surrogate computing device, the multi-presence application architecture of the present disclosure enables a single-presence application to have multiple presences on multiple computing device without modification of the single-presence application. That is, multiple presences of a single-presence application may be created without changes to the single-presence application. Even though an application may be designed to run on a single computing device, multiple presences of the application may be created on multiple computing devices without changing the application.

The multi-presence application architecture may be used with unified communication applications to reduce hair-pinning effect while providing a seamless integration of the applications' GUI in a remote desktop environment. The multi-presence application architecture may be used with hybrid cloud model and cloud-hosted application to enable simultaneous running of multiple application on different cloud platforms. The multi-presence application architecture may be used to enable application running on different computing devices to appear within a single desktop environment. Other usage of the multi-presence application architecture is contemplated.

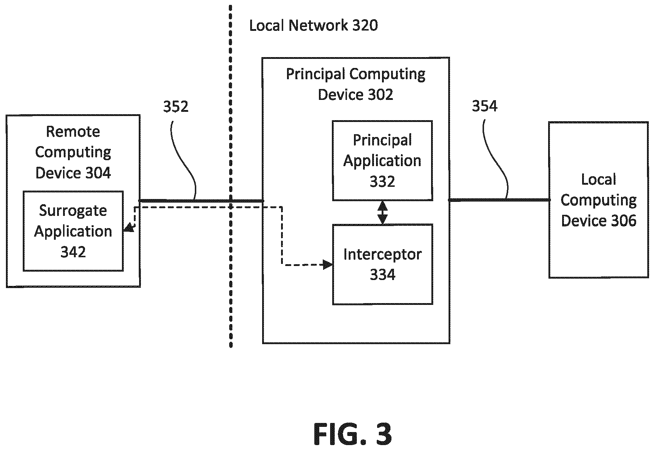

FIG. 3 illustrates an example use of multi-presence application architecture in a remote desktop scenario. A principal computing device 302 and a local computing device 306 may be located within a local network 320. A remote computing device 304 may be located outside the local network 320. The principal computing device 302, the remote computing device 304, and the local computing device 306 may communicate using wired communication and/or wireless communication.

The principal computing device 302 may execute a principal application 332. The remote computing device may execute a surrogate application 342 for the principal application 332. The principal computing device 302 may include an interceptor 334 that intercepts/reroutes a subset of system calls made by the principal application 332. The interceptor 334 may relay information between the principal application 332 and the surrogate application 342.

The principal computing device 302 may include a data path interface configured to connect the principal computing device 302 to a data path 354 that enables communication between the principal computing device 302 and the local computing device 306 that is physically local to the principal computing device 302. The local computing device 306 may have one or more electronic displays. The principal computing device 302 may include a data path interface configured to connect the principal computing device 302 to a data path 352 that enables communication between the principal computing device 302 and the remote computing device 304 that is physically remote from the principal computing device 302. The data path 354 may have higher bandwidth and/or lower latency than the data path 352.

The remote computing device 304 may refer a computing device that is remote from the principal computing device 302. The remote computing device 304 being remote from the principal computing device 302 may include one or more data paths between the remote computing device 304 and the principal computing device 302 having lower bandwidth and/or higher latency than one or more data paths between the principal computing device 302 and the local computing device 306. The remote computing device 304 being remote from the principal computing device 302 may include the remote computing device 304 and the principal computing device 302 being located within different networks.

The local computing device 306 may refer a computing device that is local to the principal computing device 302. The local computing device 306 being local to the principal computing device 302 may include one or more data paths between the local computing device 306 and the principal computing device 302 having higher bandwidth and/or lower latency than one or more data paths between the principal computing device 302 and the local computing device 306. The local computing device 306 being local to the principal computing device 302 may include the local computing device 306 and the principal computing device 302 being located within the same network.

In some implementations, the local computing device 306 may include a resource-limited computing device. A resource-limited computing device may refer to a computing device that has limited amount of processing capability, processing speed, memory, power, and/or other resources for processing information. A resource-limited computing device may have less resources than a full-feature computing device. For example, the local computing device 306 may include a zero-client device, a thin client device, and/or other resource-limited client devices.

In some implementations, the principal computing device 302 may be the same as or similar to a proxy device described in U.S. Patent Application No. 16/903,931 (herein after referred to as "'931 Patent Application"), filed on June 17, 2020, entitled "Shared Resource for Transformation of Data," the entirety of which is incorporated herein by reference. The principal computing device 302 may include/perform some or all of the functionalities of a proxy device described in the '931 Patent Application. For example, the principal computing device 302 may perform data compression and/or data decompression for the local computing device 306 as described in the '931 Patent Application.

The principal computing device 302 may reduce compression of information traveling from the remote computing device 304 to the local computing device 306. The principal computing device 302 may perform full decompression or partial decompression of information traveling from the remote computing device 304 to the local computing device 306. The principal computing device 302 may decrease encryption of information traveling from the remote computing device 304 to the local computing device 306. The principal computing device 302 may perform encoding conversion of information traveling from the remote computing device 304 to the local computing device 306.

For example, a video stream of a desktop of the remote computing device 304 may be compressed and/or encryption before being transmitted over the data path 352 to the principal computing device 302. The principal computing device 302 may decompress and decrypt the video stream before sending the decompressed/decrypted video stream to the local computing device 306.

The principal computing device 302 may increase compression of information traveling from the local computing device 306 to the remote computing device 304. The principal computing device 302 may perform full compression or partial compression of information traveling from the local computing device 306 to the remote computing device 304. The principal computing device 302 may increase encryption of information traveling from the local computing device 306 to the remote computing device 304. The principal computing device 302 may perform encoding conversion of information traveling from the local computing device 306 to the remote computing device 304.

**A** remote desktop of the remote computing device 304 may be streamed to the local computing device 306. For example, the graphics of the remote desktop of the remote computing device 304 may be encoded into a video stream (e.g., H.264 video stream) and transmitted to the local computing device 306. The principal computing device 302 may run a remote desktop client to receive a video stream of the remote desktop on the remote computing device 304. The principal computing device 302 may transmit the video stream of the remote desktop to the local computing device 306 for presentation on the electronic display(s) of the local computing device 306. The principal computing device 302 may decompress/decrypt the video stream and/or change encoding of the video stream to a lighter-weight codec for the local computing device 306.

The principal application 332 running on the principal computing device 302 and the surrogate application 342 running on the remote computing device 304 may enable a single-presence application to have multiple presences on the remote computing device 304 and the principal computing device 302. For example, the principal application 332 may be a video conferencing application. Running a video conferencing application on the remote computing device 304 while using a remote desktop application to view the remote desktop of the remote computing device 304 may cause delays and poor user experience at the local computing device 306. The local computing device 306 may not have sufficient resource to run a video conferencing application. Running a video conferencing application on the local computing device 306 may result in the resources of the remote computing device 304 (e.g., software/files on the remote computing device 304) not being available within the video conferencing application.

The video conferencing application may be run on the principal computing device 302 as the principal application 332 and a surrogate for the video conferencing application may be run on the remote computing device 304 as the surrogate application 342. The video conference application may utilize the elements/resources of the principal computing device 302 to perform functionalities of the video conference application (e.g., communicate with backend server; communicate with remote peers of the video conference; process video/audio data).

Video and audio streams from the local computing device 306 (e.g., recorded by camera and microphone of the local computing device 306) may be transmitted to the video conferencing application on the principal computing device 302 for sharing with one or more peers. The high-bandwidth and/or low-latency connection between the principal computing device 3020 and the local computing device 306 may reduce hair-pinning effect of video and audio streams being shared through the principal computing device 302. Video and audio streams from the local computing device 306 or peer(s) may not be transmitted to the remote computing device 304. Video and audio streams may be shared between peer computing devices, without going to the remote computing device 304.

The interceptor 334 may intercept/reroute system calls from the video conferencing application for content sharing functionality to the surrogate application 342 for execution on the remote computing device 304. The interceptor 334 may receive the results of the execution from the surrogate application 342 and provide the results to the principal application 332. The interceptor 334 may allow the video conferencing application running on the principal computing device 302 to stay in sync with the surrogate application for the video conference application running on the remote computing device 304.

For example, during video conferencing with one or more peers, a user of the local computing device 306 may input a command to screenshare a desktop with the peer(s). Normally, the video conferencing application would send a video stream of the desktop of the computing device on which it is running (e.g., the principal computing device 302) to the peer(s). The system call(s) for screensharing may be intercepted by the interceptor 334 and rerouted to the surrogate application 342. The surrogate application 342 may send the system call for screensharing to the remote computing device 304, which may generate a video stream of the remote desktop on the remote computing device 304. The surrogate application 342 may transmit the video stream of the remote desktop to the interceptor 334, which may in turn send the video stream to the video conferencing application (the principal application 332) for sharing with peer(s). Thus, when the principal application 332 sends a screen sharing request, the remote desktop of the remote computing device 304 may be shared over the video conferencing application. Similarly, when a user of the local computing device 306 inputs a command to access (e.g., create, open, write, close) one or more files, the system call(s) for file access may be intercepted by the interceptor 334 and rerouted to the surrogate application 342 for execution by the remote computing device 304.

The interceptor 334 may intercept/reroute other types of system calls. For example, the interceptor 334 may intercept/reroute system calls for windowing and/or clipboard by the video conferencing application for execution on the remote computing device 304. The interception/rerouting of the system calls from the video conferencing application may enable the user of the local computing device 306 to use the video conferencing application as if the video conference application is running on the remote computing device 304. The interception/rerouting of the system calls from the video conferencing application may enable use of the video conferencing application with multiple presences on different computing devices, even though the video conferencing application may be designed for single-presence operation.

While FIG. 3 shows a single remote computing device, a single principal computing device, and a single local computing device, this is merely as an example and is not meant to be limiting. For example, multiple remote computing devices may be connected to a single principal computing device. Multiple local computing devices may be connected to a single principal computing device.

In some implementations, a principal application running on a principal computing device may be represented by one or more windows (GUI window(s)). A surrogate application for the principal application running on a surrogate computing device may be represented by one or more windows. The window(s) representing the principal application running on the principal computing device and the window(s) representing the surrogate application running on the surrogate computing device may be configured to have same/similar shape, size, and/or position within their respective desktop environment. Two windows having similar shape, size, and/or position within their respective desktop environment may include the shape, size, and/or position of the two windows being within threshold value of each other. Two windows having similar shape may include the difference in the shape of the windows being less than a shape threshold value. Two windows having similar size may include the difference in the size of the windows being less than a size threshold value. Two windows having similar position may include the difference in the position of the window being less than a position threshold value. Two windows having similar shape, size, and/or position within their respective desktop environment may include the relative shape, size and/or position of the windows within their respective desktop environment being the same (e.g., two windows being placed at same relative position and/or having same aspect ratio/relative size within desktop environments of different sizes). The window(s) representing the principal application and the window(s) representing the surrogate application may be synchronized so that change in the window representing the principal application causes the same change in the window(s) representing the surrogate application, and vice versa.

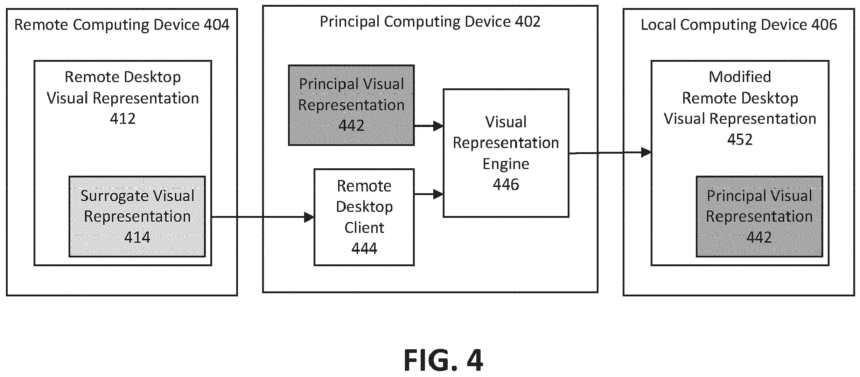

For example, FIG. 4 illustrates an example use of multi-presence application architecture in a remote desktop scenario to simulate a principal application running on a single computing device. A remote computing device 404 may be the same as or similar to the remote computing device 304. A principal computing device 402 may be the same as or similar to the principal computing device 302. A local computing device 406 may be the same as or similar to the local computing device 306.

When a principal application is executed on the principal computing device 402, a principal visual representation 442 may be generated on the principal computing device 402. The principal visual representation 442 may visually represent the principal application. For example, the principal visual representation 442 may include one or more windows for principal application. When the principal application is executed on the principal computing device 402, the window(s) for the principal application may be created within a desktop environment of the principal computing device 402.

Information about the principal visual representation 442 may be sent by the principal computing device 402 (e.g., the interceptor of the principal computing device 402) to a surrogate application running on the remote computing device 404. The surrogate application may use the information to generate a surrogate visual representation 414. The surrogate visual representation 414 may visually represent the surrogate application. For example, the surrogate visual representation 412 may include one or more windows for the surrogate application. The window(s) for the surrogate application may be generated to match/be the same/similar as/to the window(s) for the principal application. That is, the shape, size, and/or position of the window(s) for the surrogate application may be controlled to be the same/similar within the desktop environment of the surrogate computing device 404 as/to the shape, size, and/or position of the window(s) for the principal application within the desktop environment of the principal computing device 402. When a user interacts with the principal application to change the shape, size, and/or position of the window(s) for the principal application within the desktop environment of the principal computing device 402, the change may be relayed to the surrogate application to change the shape, size, and/or position of the window(s) for the surrogate application accordingly within the desktop environment of the surrogate computing device 404.

The desktop environment of the surrogate computing device 404 may be visually represented by a remote desktop visual representation 412. The remote desktop visual representation 412 may include a visual representation of the desktop environment of (the desktop running on) the surrogate computing device 404. The remote desktop visual representation 412 may include the surrogate visual representation 414. The remote desktop visual representation 412 may be transmitted to a remote desktop client 444 running on the principal computing device 402. For example, the remote desktop visual representation 412 may be transmitted as a video stream of the content of the desktop of the remote computing device 404, where the desktop includes window(s) representing the surrogate visual representation.

The principal computing device 402 may include a visual representation engine 446. The visual representation engine 446 may include a video processing engine. The visual representation engine 446 may include one or more software components and/or one or more hardware components (e.g., FPGA) to generate and/or modify visual representations. The visual representation engine 446 may obtain the principal visual representation 442 and the remote desktop visual representation 412 (e.g., directly/indirectly from the remote desktop client 444). The visual representation engine 446 may modify the remote desktop visual representation 412 by replacing the surrogate visual representation 414 with the principal visual representation 442.

For example, the visual representation engine 446 may overlay the principal visual representation 442 over the surrogate visual representation 414 to generate a modified remote desktop visual representation 452. For instance, the window(s) of the surrogate application on the remote desktop of the remote computing device 404 may act as a green screen on which the window(s) of the principal application are inserted/overlaid. The modified remote desktop visual representation 452 (on which the principal visual representation 442 has replaced the surrogate visual representation 414) may be provided to the local computing device 406. The local computing device 406 may present the modified remote desktop visual representation 452 on one or more electronic displays. Inclusion of the principal visual representation 442 (of the principal application running on the principal computing device 402) in the modified remote desktop visual representation of the desktop running on the remote computing device 404 may simulate the principal application running solely on the remote computing device 404.

For example, the principal application running on the principal computing device 402 may be a video conferencing application. The principal computing device 402 may generate a window to represent the video conferencing application. A surrogate window having the same/similar shape, size, and/or position may be generated for the surrogate application running on the remote computing device 404. The principal computing device 402 may receive a video stream of the remote desktop running on the remote computing device 404, and the window (GUI window) of the video conferencing application may be overlaid on top of the surrogate window. The window of the video conferencing application may be overlaid on top of the exact space occupied by the surrogate window before the modified video stream of the remote desktop is transmitted to the local computing device 406. This modification of the remote desktop video stream may create the illusion that the video conferencing application is running on the remote computing device 404. This modification of the remote desktop video stream may create the illusion that the video conferencing window (GUI window) is part of the remote desktop.

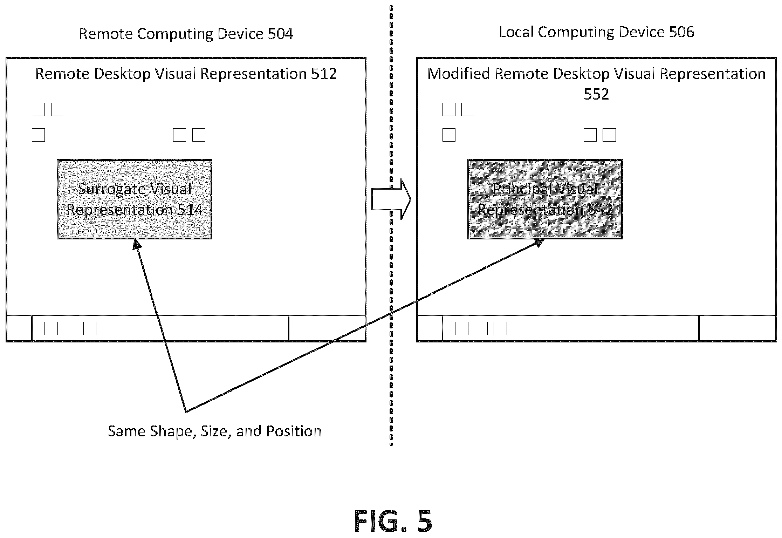

FIG. 5 illustrates an example use of multi-presence application architecture in which a surrogate visual representation is replaced with a principal visual representation. A remote computing device 504 may include a desktop environment in which a surrogate visual representation 514 is generated as a surrogate for a principal visual representation (generated on a principal computing device). A remote desktop visual representation 512 may include a screenshot/video stream of the desktop running on the remote computing device 504. For example, the remote desktop visual representation 512 may include icons, objects, tools, and/or other visual representations of the desktop running on the remote computing device 504. The remote desktop visual representation 512 may be transmitted to the principal computing device, and the principal computing device may replace the surrogate visual representation 514 with a principal visual representation 542 to generate a modified remote desktop visual representation 552. For example, the window of the surrogate application on the remote desktop visual representation 512 may be replaced with the window of the principal application. The modified remote desktop visual representation 552 may be transmitted to a local computing device 506 for presentation on electronic display(s). The surrogate visual representation 514 and the principal visual representation 542 may be configured to have the same/similar shape, size, and/or position within their respective desktop environments. Change in shape, size, and/or position of one visual representation may be propagated to the other so that they stay in sync.

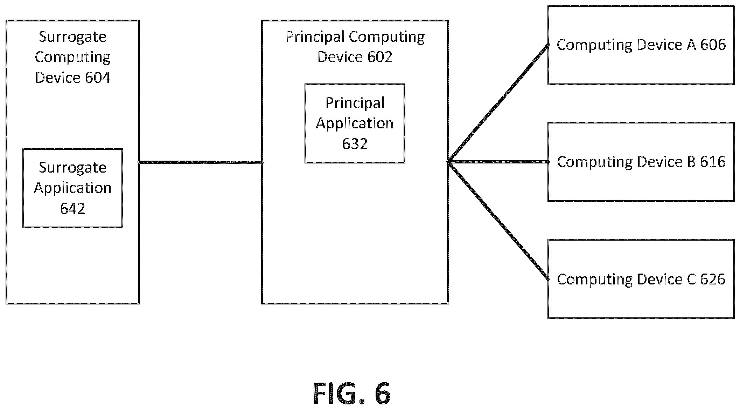

FIG. 6 illustrates an example use of multi-presence application architecture in which a surrogate application 642 is run on a surrogate computing device 604 for multiple computing devices 606, 616, 626. A principal computing device 602 may run a principal application 632, for which the surrogate application 642 serves as a surrogate. The principal application 632 and the surrogate application 642 may be utilized by the computing devices 606, 616, 626. For example, the computing devices 606, 616, 626 may receive a video stream of the desktop running on the surrogate computing device 604 with the principal application 632 and the surrogate application 642 being used to simulate the principal application 632 running solely on the surrogate computing device 604. The video stream of the desktop may be modified by the principal computing device 602 (e.g., to insert window(s) of the principal application 632 in place of the window(s) of the surrogate application 642) before being transmitted (e.g., multicast) to the computing device 606, 616, 626.

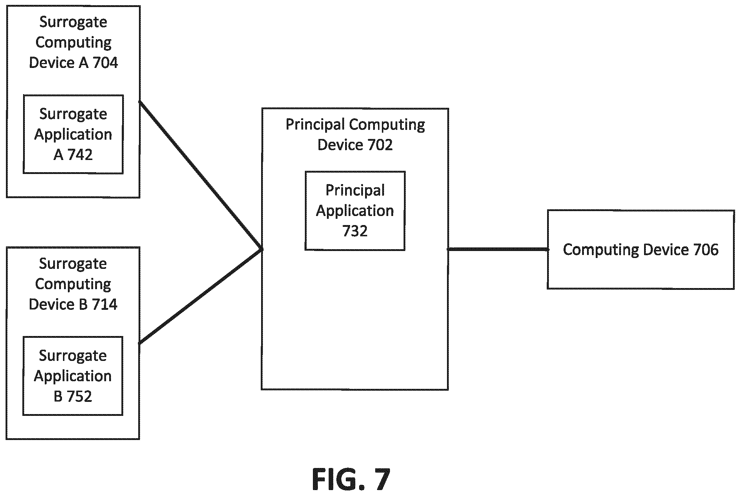

FIG. 7 illustrates an example use of multi-presence application architecture in which multiple surrogate applications 742, 752 are run on multiple surrogate computing devices 704, 714 for a computing device 706. A principal computing device 702 may run a principal application 732. The surrogate applications 742, 752 may serve as surrogate for the principal application 732. The surrogate applications 742, 752 may serve as surrogates for same or different functionalities of the principal application 732. For example, the surrogate application A 742 may serve as a surrogate for networking functionalities of the principal application 732 while the surrogate application B 752 may serve as a surrogate for screen sharing and file access functionalities of the principal application 732. The networking functionalities of the principal application 732 may be performed by the surrogate computing device A 704 (via interception/rerouting of networking system calls from the principal application 732 to the surrogate application A 742) while the screen sharing and file access functionalities of the principal application 732 may be performed by the surrogate computing device B 714 (via interception/rerouting of screen sharing and file access system calls from the principal application 732 to the surrogate application B 752). Other division of functionalities across multiple surrogate applications on multiple surrogate computing devices is contemplated.

While the disclosure has been described above using different figures, one or more features/functionalities described with respect to one figure is not limited to the one figure and may be applied to other aspects of the disclosure. For example, one or more features/functionalities described with respect to FIG. 1 may be applied may be applied to other aspects of the disclosure (e.g., as described with respect with other figures).

Implementations of the disclosure may be made in hardware, firmware, software, or any suitable combination thereof. Aspects of the disclosure may be implemented as instructions stored on a machine-readable medium, which may be read and executed by one or more processors. A machine-readable medium may include any mechanism for storing or transmitting information in a form readable by a machine (e.g., a computing device). For example, a tangible (non-transitory) machine-readable storage medium may include read only memory, random access memory, magnetic disk storage media, optical storage media, flash memory devices, and others, and a machine-readable transmission media may include forms of propagated signals, such as carrier waves, infrared signals, digital signals, and others. Firmware, software, routines, or instructions may be described herein in terms of specific exemplary aspects and implementations of the disclosure, and performing certain actions.

Any communication medium may be used to facilitate interaction between any components of a principal computing device, a surrogate computing device, and/or other computing device. One or more components of a principal computing device, a surrogate computing device, and/or other computing device may communicate with each other through hard-wired communication, wireless communication, or both. As non-limiting examples, wireless communication may include one or more of radio communication, Bluetooth communication, Wi-Fi communication, cellular communication, infrared communication, or other wireless communication. Other types of communications are contemplated by the present disclosure.

Although processor 11 is shown in FIG. 1 as a single entity, this is for illustrative purposes only. In some implementations, processor 11 may comprise a plurality of processing units. These processing units may be physically located within the same device, or processor 11 may represent processing functionality of a plurality of devices operating in coordination. Processor 11 may be configured to execute one or more components by software; hardware; firmware; some combination of software, hardware, and/or firmware; and/or other mechanisms for configuring processing capabilities on processor 11.

It should be appreciated that although processor components are illustrated in FIG. 1 as being co-located within a single processing unit, in implementations in which processor 11 comprises multiple processing units, one or more of processor components may be located remotely from the other processor components. Processor components may comprise instructions which may program processor 11 and/or principal computing device 10 to perform the functionalities descried herein and/or specialized hardware designed to perform the functionalities described herein.

The description of the functionality provided by the different processor components described herein is for illustrative purposes, and is not intended to be limiting, as any of processor components may provide more or less functionality than is described. For example, one or more of processor components may be eliminated, and some or all of its functionality may be provided by other processor components. As another example, processor 11 may be configured to execute one or more additional processor components that may perform some or all of the functionality attributed to one or more of processor components described herein.

The electronic storage media of electronic storage 12 may be provided integrally (i.e., substantially non-removable) with one or more components of principal computing device 10 and/or as removable storage that is connectable to one or more components of principal computing device 10 via, for example, a port (e.g., a USB port, a Firewire port, etc.) or a drive (e.g., a disk drive, etc.). Electronic storage 12 may include one or more of optically readable storage media (e.g., optical disks, etc.), magnetically readable storage media (e.g., magnetic tape, magnetic hard drive, floppy drive, etc.), electrical charge-based storage media (e.g., EPROM, EEPROM, RAM, etc.), solid-state storage media (e.g., flash drive, etc.), and/or other electronically readable storage media. Electronic storage 12 may be a separate component within principal computing device 10, or electronic storage 12 may be provided integrally with one or more other components of principal computing device 10 (e.g., processor 11). Although electronic storage 12 is shown in FIG. 1 as a single entity, this is for illustrative purposes only. In some implementations, electronic storage 12 may comprise a plurality of storage units. These storage units may be physically located within the same device, or electronic storage 12 may represent storage functionality of a plurality of devices operating in coordination.

Although the system(s) and/or method(s) of this disclosure have been described in detail for the purpose of illustration based on what is currently considered to be the most practical and preferred implementations, it is to be understood that such detail is solely for that purpose and that the disclosure is not limited to the disclosed implementations, but, on the contrary, is intended to cover modifications and equivalent arrangements that are within the spirit and scope of the appended claims. For example, it is to be understood that the present disclosure contemplates that, to the extent possible, one or more features of any implementation can be combined with one or more features of any other implementation.

## Claims

1. A principal computing device for utilizing a multi-presence application architecture, comprising:
a communication interface configured to connect the principal computing device to a surrogate computing device, wherein the surrogate computing device executes a surrogate application; and
one or more processors configured to:
execute a principal application on the principal computing device, wherein the surrogate application running on the surrogate computing device is a surrogate for the principal application running on the principal computing device, the principal application running on the principal computing device and the surrogate application running on the surrogate computing device forming multiple presences of the principal application on separate computing devices; and
relay information between the principal application running on the principal computing device and the surrogate application running on the surrogate computing device.

2. The principal computing device of claim 1, wherein the relay of information between the principal application running on the principal computing device and the surrogate application running on the surrogate computing device includes:
identification of a subset of system calls made by the principal application running on the principal computing device;
provision of the subset of system calls to the surrogate application running on the surrogate computing device, wherein the surrogate application executes the subset of system calls on the surrogate computing device to generate responsive information;
reception of the responsive information from the surrogate application running on the surrogate computing device; and
provision of the responsive information to the principal application running on the principal computing device.

3. The principal computing device of claim 2, wherein:
the principal application runs on the principal computing device using a first operating system;
the surrogate application for the principal application runs on the surrogate computing device using a second operation system different from the first operating system; and
the relay of information between the principal application running on the principal computing device and the surrogate application running on the surrogate computing device further includes translation of information between the first operating system and the second operating system.

4. The principal computing device of claim 1, wherein multiple surrogate applications for the principal application are executed on multiple surrogate computing devices.

5. The principal computing device of claim 1, wherein:
the principal application running on the principal computing device is represented by a first window;
the surrogate application running on the surrogate computing device is represented by a second window; and
the first window and the second window are configured to have same/similar shape, size, and/or position within their respective desktop environment.

6. The principal computing device of claim 1, wherein the principal application is a network application.

7. The principal computing device of claim 1, wherein the principal application is a storage application.

8. The principal computing device of claim 1, wherein the principal application is a graphical user interface application.

9. A method for utilizing a multi-presence application architecture, the method performed by a principal computing device including a communication interface and one or more processors, the communication interface configured to connect the principal computing device to a surrogate computing device, wherein the surrogate computing device executes a surrogate application, the method comprising:
executing a principal application on the principal computing device, wherein the surrogate application running on the surrogate computing device is a surrogate for the principal application running on the principal computing device, the principal application running on the principal computing device and the surrogate application running on the surrogate computing device forming multiple presences of the principal application on separate computing devices; and
relaying information between the principal application running on the principal computing device and the surrogate application running on the surrogate computing device.

10. The method of claim 9, wherein relaying the information between the principal application running on the principal computing device and the surrogate application running on the surrogate computing device includes:
identifying a subset of system calls made by the principal application running on the principal computing device;
providing the subset of system calls to the surrogate application running on the surrogate computing device, wherein the surrogate application executes the subset of system calls on the surrogate computing device to generate responsive information;
receiving the responsive information from the surrogate application running on the surrogate computing device; and
providing the responsive information to the principal application running on the principal computing device.

11. The method of claim 10, wherein:
the principal application runs on the principal computing device using a first operating system;
the surrogate application for the principal application runs on the surrogate computing device using a second operation system different from the first operating system; and
wherein relaying the information between the principal application running on the principal computing device and the surrogate application running on the surrogate computing device includes further includes translating the information between the first operating system and the second operating system.

12. The method of claim 9, wherein:
the principal application running on the principal computing device is represented by a first window;
the surrogate application running on the surrogate computing device is represented by a second window; and
the first window and the second window are configured to have same/similar shape, size, and/or position within their respective desktop environment.

13. A non-transitory computer-readable medium having computer-executable instructions stored thereon which, when executed by a computer, cause the computer to utilize a multi-presence application architecture by executing steps comprising:
relaying information between a principal application running on a principal computing device and a surrogate application running on a surrogate computing device, wherein the surrogate application running on the surrogate computing device is a surrogate for the principal application running on the principal computing device, the principal application running on the principal computing device and the surrogate application running on the surrogate computing device forming multiple presences of the principal application on separate computing devices.

14. The non-transitory computer-readable medium of claim 13, wherein relaying the information between the principal application running on the principal computing device and the surrogate application running on the surrogate computing device includes:
identifying a subset of system calls made by the principal application running on the principal computing device;
providing the subset of system calls to the surrogate application running on the surrogate computing device, wherein the surrogate application executes the subset of system calls on the surrogate computing device to generate responsive information;
receiving the responsive information from the surrogate application running on the surrogate computing device; and
providing the responsive information to the principal application running on the principal computing device.

15. The non-transitory computer-readable medium of claim 14, wherein:
the principal application runs on the principal computing device using a first operating system;
the surrogate application for the principal application runs on the surrogate computing device using a second operation system different from the first operating system; and
wherein relaying the information between the principal application running on the principal computing device and the surrogate application running on the surrogate computing device includes further includes translating the information between the first operating system and the second operating system.
